# EUROPÄISCHE PATENTSCHRIFT

(11) **EP 2 641 058 B1**
(45) Veröffentlichungstag und Bekanntmachung des Hinweises auf die Patenterteilung: **06.05.2015**
(21) Anmeldenummer: 11785340.8
(22) Anmeldetag: 14.11.2011
(51) Int. Cl.: G01C 21/36, G01C 21/34

(54) **VERFAHREN ZUM BERECHNEN EINER RESTREICHWEITE UND/ODER EINES VERBRAUCHS EINES KRAFTFAHRZEUGS UND KRAFTFAHRZEUG**
METHOD FOR CALCULATING CONSUMPTION AND/OR A REMAINING RANGE OF A MOTOR VEHICLE AND MOTOR VEHICLE
PROCÉDÉ DE CALCUL D'UNE AUTONOMIE RESTANTE ET/OU D'UNE CONSOMMATION D'UN VÉHICULE AUTOMOBILE ET LEDIT VÉHICULE AUTOMOBILE

(30) Priorität: 19.11.2010 DE 102010051713; 19.11.2010 DE 102010051714; 17.06.2011 DE 102011105256
(43) Veröffentlichungstag der Anmeldung: 25.09.2013
(73) Patentinhaber: Audi AG, 85045 Ingolstadt (DE)
(72) Erfinder: LANGE, Rainer, 85049 Ingolstadt (DE); HARRIES, Matthias, 91207 Lauf (DE)
(74) Vertreter: Brandt, Kai
(86) Internationale Anmeldenummer: PCT/EP2011/005716
(87) Internationale Veröffentlichungsnummer: WO 2012/065708

(56) Entgegenhaltungen:
- EP-A1- 2 172 740
- DE-A1-102008 037 262
- US-A- 5 539 399

## Beschreibung

Die Erfindung betrifft ein Verfahren zum Berechnen einer Restreichweite und/oder eines Verbrauchs eines Kraftfahrzeugs mit einem Energiespeichersystem für einen auf mindestens ein Rad des Kraftfahrzeugs wirkenden Antrieb sowie ein Kraftfahrzeug.

Kraftfahrzeuge mit Energiespeichersystemen für ihre Antriebe haben zum einen eine Restreichweite, die von der aktuell im Energiespeichersystem gespeicherten Energie abhängig ist, und weisen zum anderen einen Verbrauch auf, wenn sie eine gewisse Strecke zurücklegen. Daher wurden, insbesondere für Kraftfahrzeuge mit Navigationssystemen, Verfahren vorgeschlagen, um die Restreichweite und/oder den Verbrauch eines Kraftfahrzeugs zu ermitteln und mit Hilfe des Navigationssystems einem Fahrer zur Kenntnis zu bringen. Beispielsweise kann eine Reichweite anhand einer aus maximal erreichbaren Punkten ermittelten Fläche einer Kartendarstellung eines Navigationssystems überlagert dargestellt werden. Beispielsweise können mit der aktuell gespeicherten Energie noch erreichbare Bereiche, die ohne Rückkehr erreicht werden können, in einer Farbe gekennzeichnet werden, weitere Bereiche, die mit Rückkehr zum derzeitigen Standort erreicht werden können, in einer anderen Farbe (bildliche Vorstellung einer "Spiegelei"-Form bei der "gelb = Rückkehr" und "weiß = erreichbar" bedeuten würde).

Zur Ermittlung der Restreichweite eines Kraftfahrzeugs wurde vorgeschlagen, Algorithmen zu versenden, die auch zur Ermittlung zu befahrender Strecken zu einem Zielpunkt in einem Navigationssystem eingesetzt werden. Dabei wird meistens der sogenannte Dijkstra-Algorithmus oder ein Derivat des Dijkstra-Algorithmus verwendet. Der Dijkstra-Algorithmus basiert darauf, sich letztlich von Abzweigemöglichkeit zu Abzweigemöglichkeit ausgehend von der Startposition bzw. aktuellen Position durch die Kartendaten zu bewegen, wobei anhand einer Kostenfunktion, häufig der schnellsten Durchfahrzeit, ein optimaler Weg zu einem Zielpunkt bestimmt werden kann. Dijkstra-Algorithmen, die sich letztlich durch das Kartenmaterial hindurchtasten, sind auch für die Restreichweitenberechnung geeignet, wenn die Kostenfunktion auf der verbrauchten Energie für den Streckenabschnitt als Kosten basiert. Bei der Ermittlung der Restreichweite existiert jedoch kein spezieller Zielpunkt, da in alle Richtungen fortgeschritten werden muss und abgebrochen wird, wenn die entlang der Strecke verbrauchte Energie der aktuell im Energiespeichersystem gespeicherten Energie entspricht oder diese überschreitet. Das bedeutet, es ist eine enorme Rechenzeit und ein sehr großer Berechnungsaufwand erforderlich, um eine Restreichweite bzw. gerade noch erreichbare Punkte zu bestimmen.

Hierzu kommt, dass der Dijkstra-Algorithmus zur Restreichweitenberechnung zumindest bei größeren Reichweiten recht ungenau ist, nachdem der tatsächliche Verbrauch zusätzlich vom Fahrstil, den Umgebungsbedingungen, dem Verkehr und dergleichen abhängt. Die Ungenauigkeit des Dijkstra-Algorithmus nimmt letztlich mindestens quadratisch mit der noch vorhandenen Energie zu, so dass mit einer größeren Unsicherheit zu rechnen ist.

Es wurde vorgeschlagen, im Rahmen des Dijkstra-Algorithmus nur größere Straßen, beispielsweise Autobahnen und gegebenenfalls noch Bundesstraßen, zu berücksichtigen, jedoch erhält man dann als maximal erreichbare Punkte nur dort Punkte, wo auch dieser Straßentyp vorliegt. Straßen niedriger Kategorie, die von diesen Autobahnen wegführen und potentiell erreichbar wären, werden in der Anzeige dann möglicherweise als unerreichbar dargestellt.

Ein alternativer Algorithmus wird in der nachveröffentlichten Patentanmeldung DE 10 2010 051 546.9-53 vorgeschlagen, worin statt der Kartendaten des Dijkstra-Algorithmus vorgeschlagen wird, diesen auf Flächensegmenten zu basieren, denen jeweils Energiekosten, gegebenenfalls richtungsabhängig, zugeordnet sind, die benötigt werden, um das jeweilige Flächensegment zu durchqueren. Solche Flächensegmente können beispielsweise relativ groß gewählt werden, etwa in einer Größe von 2 km * 2 km. Durch ein "Ablaufen" der Flächensegmente ergibt sich mithin in der Summe ein Verbrauch, den das Kraftfahrzeug auf dem abgelaufenen Weg hat. Die Berechnung kann dabei analog zum Dijkstra-Algorithmus erfolgen, wobei letztlich von einem ersten Flächensegment, in dem sich das Kraftfahrzeug beispielsweise aktuell aufhält, zu einem zweiten Flächensegment expandiert wird, das an das erste Flächensegment angrenzt und dem von allen an das erste Flächensegment angrenzenden Flächensegmenten die geringsten Energiekosten zugeordnet sind. Im nächsten Schritt wird dann vom ersten und zweiten Flächensegment zu einem dritten Flächensegment expandiert, das an das erste Flächensegment angrenzt und dem von allen an das erste Flächensegment angrenzenden Flächensegmenten die nach dem zweiten Flächensegment geringsten Energiekosten zugeordnet sind, oder das an das zweite Flächensegment angrenzt, wenn dem ersten, zweiten und dritten Flächensegment in Summe geringere Energiekosten zugeordnet sind als dem ersten Flächensegment und dem Flächensegment in Summe zugeordnet sind, dem von allen an das erste Flächensegment angrenzenden Flächensegmenten die nach dem zweiten Flächensegment geringsten Energiekosten zugeordnet sind. Dieses Verfahren wird iterativ für die nächsten Flächensegmente fortgesetzt. Alternativ oder ergänzend können die Flächensegmente zu Reichweiten und/oder Verbrauchsberechnung sternförmig und/oder rekursiv expandiert werden. Die Reichweiten- und/oder Verbrauchsberechnung auf einem Expansionsweg kann abgebrochen werden, wenn die Summe der Energiekosten der Flächensegmente eine vorgegebene Energiemenge erreicht oder übersteigt, insbesondere die aktuell in dem Energiespeichersystem eingespeicherte Energiemenge. Dieser Algorithmus lässt sich mit einem deutlich geringeren Berechnungsaufwand durchführen als der auf dem Straßennetz basierende Dijkstra-Algorithmus, so dass Ressourcen und Zeit eingespart werden können. Zwar ist der Algorithmus heuristischer als der Dijkstra-Algorithmus, jedoch ist dies insbesondere bei großen Reichweiten weniger relevant, nachdem die durch den Algorithmus nicht erfassbaren Einflüsse, die oben bereits diskutiert wurden, ohnehin eine gewisse Ungenauigkeit bedingen.

DE 10 2008 037 262 A1 offenbart ein Verfahren zur Ausgabe einer ermittelten verbleibenden Reichweite einer Tankfüllung eines Kraftfahrzeuges in einer optischen Ausgabe eines Navigationssystems des Kraftfahrzeugs. Dabei sind zwei Möglichkeiten zur Darstellung der Reichweite offenbart, nämlich als Polygonzug oder als Kreis. Bei der Ermittlung des Polygonzugs werden unter anderem für das Fahrzeug fahrbare Straßen und Ortsdurchfahrten berücksichtigt, wobei die Reichweite entlang einer Überlandstraße größer ist als beim Durchqueren einer Stadt. Die Darstellung des Polygonzugs kann in Abhängigkeit des Tankfütlstands erfolgen. Dabei wird mit abnehmendem Tankinhalt aufgrund genauerer Ermittlung der Reichweite eine Schärfe des Polygonzugs gewählt.

EP 2 172 740 A1 betrifft eine Kartendarstellungsvorrichtung, wobei dargelegt wird, dass es für einen Benutzer schwierig ist, zu bestimmen, wie lange er eine Batterie laden muss, bis eine gewünschte Restreichweite erzielt ist, wenn er nur eine Ladezeit eingeben kann, um diese zu berechnen. Als Lösung wird dort vorgeschlagen, für mehrere Ladezeiten eine Reichweite zu ermitteln und diese Reichweiten simultan darzustellen. Es wird festgestellt, dass bei größerer Reichweite ein größerer Fehler auftritt, so dass eine Reduzierung der ermittelten Reichweite stattfinden soll.

Der Erfindung liegt daher die Aufgabe zugrunde, ein Berechnungsverfahren für die Restreichweite und/oder den Verbrauch anzugeben, welches gegenüber den bekannten Algorithmen eine ausgewogene Berechnung in verschiedenen Situationen erlaubt.

Zur Lösung dieser Aufgabe ist bei einem Verfahren der eingangs genannten Art erfindungsgemäß vorgesehen, dass die Restreichweite und/oder der Verbrauch auf eine erste Weise unter Verwendung eines ersten Algorithmus und auf eine zweite Weise unter Verwendung eines zweiten Algorithmus berechenbar ist, wobei die zweite Weise einen höheren Berechnungsaufwand erfordert als die erste Weise, dass zwischen der ersten Weise und der zweiten Weise in Abhängigkeit der im Energiespeichersystem gespeicherten Energie umgeschaltet wird, und dass als der erste Algorithmus ein auf Flächensegmenten mit jeweils zugeordneten Energiekosten basierender Algorithmus und als der zweite Algorithmus ein ein auf Straßensegmenten basierender Dijkstra-Algorithmus oder ein von einem Dijkstra-Algorithmus abgeleiteter Algorithmus mit Energiewerten als Kostenfunktion verwendet wird.

Erfindungsgemäß wurde also erkannt, dass die Verwendung mehrerer Algorithmen und einer Umschaltung es erlaubt, dennoch in jeder Situation hinreichend geeignete Werte für die Reichweite und/oder den Verbrauch zu erhalten. So sind genaue, aber rechenintensive und ungenaue, weniger Berechnungsaufwand erfordernde Algorithmen zur Restreichweitenberechnung bekannt. Bei einer hohen Restenergie, also beispielsweise bei einem gefüllten Kraftstofftank und/oder einer voll geladenen Batterie, kann die Restreichweite beilspielsweise 800 km oder mehr für bestimmte Strecken betragen. Eine genaue Berechnung ist hier nicht notwendig, da das Ergebnis hier vom Fahrer bzw. Benutzer ohnehin eher "grob" erwartet wird, insbesondere, nachdem Einflussgrößen, wie beispielsweise das Fahrverhalten, die nicht durch den Algorithmus abgebildet werden können, einen deutlich größeren Einfluss haben als bei geringen Restreichweiten bzw. bei geringen Restenergien. Im Gegensatz hierzu kann bei geringen Restreichweiten durchaus eine genauere Berechnung, insbesondere mittels des zweiten Algorithmus, durchgerührt werden, nachdem der Aufwand aufgrund der geringen Restenergie geringer ist und so eine genauere Anzeige erhalten werden kann. Mithin schlägt die Vorliegende Erfindung vor, dass im Kraftfahrzeug selbst, beispielsweise mittels einer Berechnungsvorrichtung, die Teil eines Navigationssystems sein kann, umzuschalten, welcher Algorithmus nun konkret zur Ermittlung der Restreichweite und/oder des Verbrauchs eingesetzt wird.

Dies erlaubt es, insgesamt die Rechenlast in einer Berechnungsvorrichtung zu reduzieren, wobei es durchaus denkbar ist, dass kein für den Fahrer merklicher Qualitätsverlust bei der Berechnung der Restreichweite auftritt.

Als das Energiespeichersystem kann ein Energiespeichersystem verwendet werden, das einen Kraftstofftank und/oder eine Batterie aufweist. Das Verfahren ist also sowohl für Kraftfahrzeuge mit nur einem Verbrennungsmotor und reine Elektrokraftfahrzeuge als auch für Hybridfahrzeuge einsetzbar.

In weiterer Ausgestaltung der vorliegenden Erfindung kann vorgesehen sein, dass bei einer einen Grenzwert unterschreitenden Grenzenergie der zweite Algorithmus und sonst der erste Algorithmus verwendet wird. Dies ist insbesondere dann sinnvoll, wenn der Berechnungsaufwand des zweiten Algorithmus mit niedriger Reichweite sinkt und zudem der zweite Algorithmus im Nahbereich genauer als der erste Algorithmus ist. Der Effekt, dass der Berechnungsaufwand sinkt, kann dann vorteilhaft genutzt werden, um es dennoch zu ermöglichen, genau dann mit dem zweiten Algorithmus geeignete und genaue Werte zu ermitteln, wenn diese auch benötigt werden, beispielsweise dann, wenn ein Flächensegmente benutzender Algorithmus aufgrund der Größe der Flächensegmente zu ungenau würde und dergleichen.

In konkreter Ausgestaltung der vorliegenden Erfindung ist vorgesehen, dass der erste Algorithmus ein auf Flächensegmenten mit jeweils zugeordneten Energiekosten basierender Algorithmus ist und der zweite Algorithmus ein ein auf Straßensegmenten basierender Dijkstra-Algorithmus mit Energiewerten als Kostenfunktion ist. Wie bereits eingangs erwähnt, ist ein auf Flächensegmenten basierender Algorithmus beispielsweise durch die nachveröffentlichte DIE 10 2010 051 546.9-53 beschrieben. Ein derartiger Algorithmus weist letztlich - abhängig von der Größe der Flächensegrnente - über alle denkbaren Restenergien im Wesentliche gleiche Unsicherheit auf, die allerdings im Nahbereich auffälliger ist, nachdem hier der Einfluss externer Einflussgrößen, wie beispielsweise des Fahrverhaltens oder der Umgebungsbedingungen, geringer ist. Beispielsweise können hier Flächensegmente von 1 km * 1km oder größer betrachtet werden. Bei dem Dijkstra-Algorithmus steigt nicht nur die Ungenauigkeit mit steigendem Abstand, sondern auch der Rechenaufwand steigt überproportional an. Im Nahbereich, also bei geringen Restreichweiten bzw. Restenergien, hält sich der Berechnungsaufwand jedoch in Grenzen und es ist eine genauere Berechnung möglich. Entsprechend kann nun ein Grenzwert so gewählt werden, dass der Berechnungsaufwand nicht zu groß wird und dennoch immer hinreichend genaue Informationen zur Restreichweite vorliegen.

In weiterer Ausgestaltung der vorliegenden Erfindung kann ein zum Umschalten zwischen der ersten Weise und der zweiten Weise genutztes Kriterium, insbesondere der Grenzwert, in Abhängigkeit von einer Benutzereingabe angepasst werden. Es ist also möglich, dass sich ein Benutzer selbst konfiguriert, wie schnell und/oder wie genau ihm die benötigten Informationen zur Verfügung stehen sollen. Beispielsweise ist es denkbar, dass eine Art Regler vorgesehen ist, über den eine gewollte Restreichweite zum Umschalten oder dergleichen einstellbar ist, anhand der dann vorteilhaft das Kriterium, insbesondere der Grenzwert, angepasst werden kann.

Wie bereits erwähnt, kann vorgesehen sein, dass aus den Ergebnissen der Restreichweitenberechnung eine erreichbare Teilfläche einer Karte ermittelt und anzeigt wird. Beispielsweise ist es möglich, zur deutlichen Unterscheidung noch erreichbare Kartenbereiche in einer anderen Farbe darzustellen als nicht erreichbare Kartenbereiche. Die Umrandung der erreichbaren Teilfläche kann dabei noch geglättet werden, um ein angenehmeres Anzeigebild zu erzeugen.

Neben dem Verfahren betrifft die Erfindung auch ein Kraftfahrzeug mit einer Berechnungsvorrichtung zum Berechnen einer Restreichweite und/oder eines Verbrauchs des Kraftfahrzeugs, einem auf wenigstens ein Rad des Kraftfahrzeugs wirkenden Antrieb und einem Energiespeichersystem für den Antrieb, welches sich dadurch auszeichnet, dass durch die Berechnungsvorrichtung die Restreichweite und/oder der Verbrauch auf eine erste Weise und eine zweite Weise berechenbar ist, wobei die zweite Weise einen höheren Berechnungsaufwand erfordert als die erste Weise, und durch die Berechnungsvorrichtung zwischen der ersten Weise und der zweiten Weise in Abhängigkeit der im Energiespeichersystem gespeicherten Energie umschaltbar ist, wobei der erste Algorithmus ein auf Flächensegmenten mit jeweils zugeordneten Energiekosten basierender Algorithmus und der zweite Algorithmus ein auf Straßensegmenten basierender Dijkstra-Algorithmus oder ein von einem Dijkstra-Algorithmus abgeleiteter Algorithmus mit Energiewerten ist. Die Berechnungsvorrichtung ist also letztlich zur Durchführung des erfindungsgemäßen Verfahrens ausgebildet, so dass sich sämtliche Ausführungen bezüglich des erfindungsgemäßen Verfahrens analog auf das erfindungsgemäße Kraftfahrzeug übertragen lassen, mit welchem mithin die Vorteile der Erfindung ebenso erzielt werden können.

Insbesondere kann vorgesehen sein, dass das Energiespeichersystem einen Kraftstofftank und/oder eine Batterie aufweist. Die vorliegende Erfindung kann mithin sowohl in Kraftfahrzeugen mit nur einem Verbrennungsmotor oder rein Elektrokraftfahrzeugen realisiert werden als auch in Hybridfahrzeugen.

Weiterhin kann vorgesehen sein, dass die Berechnungsvorrichtung Teil eines Navigationssystems ist, insbesondere ein Steuergerät eines Navigationssystems. Nachdem ein Teil der Algorithmen auch zur Ermittlung von optimalen Routen genutzt wird, kann es sinnvoll sein, auch die Berechnung der Restreichweite und/oder des Verbrauchs als Funktion mit in das Navigationssystem zu integrieren, so dass gegebenenfalls vorhandene Hardware- und/oder Softwaremittel mehrfach genutzt werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: einen Ablaufplan des erfindungsgemäßen Verfahrens, und
- Fig. 3: eine Prinzipskizze einer möglichen Anzeige einer Restreichweite.

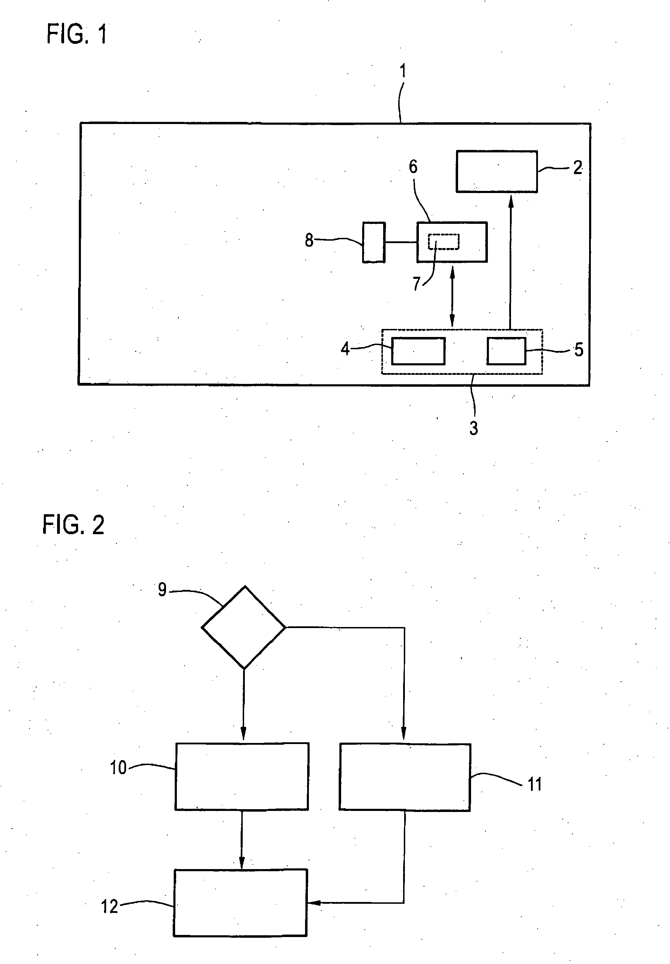

Fig. 1 zeigt eine Prinzipskizze eines erfindungsgemäßen Kraftfahrzeugs 1. Dabei handelt es sich um ein Hybridfahrzeug, das bedeutet, das dem Antrieb 2 zugeordnete Energiespeichersystem 3 umfasst sowohl einen Kraftstofftank 4 wie auch eine Batterie 5. Daten über die aktuell in dem Energiespeichersystem 3 vorhandene Restenergie werden an ein Navigationssystem 6 weitergeleitet, welches eine Berechnungsvorrichtung 7 umfasst. Diese ist dazu ausgebildet, die Restreichweite und/oder den Verbrauch auf eine erste Weise unter Verwendung eines ersten Algorithmus und auf eine zweite Weise unter Verwendung eines zweiten Algorithmus zu berechnen, wobei die zweite Weise einen höheren Berechnungsaufwand erfordert als die erste Weise. In Abhängigkeit der im Energiespeichersystem 3 gespeicherten Energie kann zwischen der ersten Weise und der zweiten Weise umgeschaltet werden, wobei vorliegend ein Energiegrenzwert als Kriterium verwendet wird. Die Berechnungsvorrichtung 7 ist also zur Durchführung des erfindungsgemäßen Verfahrens ausgebildet.

Das Navigationssystem 6 ist ferner mit einer Anzeigevorrichtung 8 verbunden, auf der eine berechnete Restreichweite und/oder ein berechneter Verbrauch angezeigt werden kann.

Fig. 2 zeigt einen möglichen Ablaufplan eines Ausführungsbeispiel eines erfindungsgemäßen Verfahrens. In einem Schritt 9 wird überprüft, ob durch die in dem Energiespeichersystem 3 gespeicherte Restenergie ein Grenzwert unterschritten wird. Ist dies nicht der Fall, wird in einem Schritt 10 zur Ermittlung der Restreichweite der erste Algorithmus benutzt, das bedeutet, die Restreichweite wird auf die erste Weise berechnet. Dabei wird vorliegend ein Algorithmus verwendet, der auf einer Aufteilung der Karte in Flächensegmente basiert, denen jeweils Energiekosten zugeordnet sind, um das Flächensegment zu durchqueren. Ausgehend von dem Flächensegment, in dem sich das Kraftfahrzeug 1 aktuell befindet, werden nun mittels der verbliebenen Restenergie erreichbare Endflächensegmente aufgesucht.

Wird in Schritt 9 festgestellt, dass die in dem Energiespeichersystem 3 gespeicherte Energie kleiner als der Grenzwert ist, so wird in Schritt 11 die Restreichweite auf die zweite Weise mittels des zweiten Algorithmus berechnet, bei dem es sich vorliegend um einen weithin bekannten Dijkstra-Algorithmus handelt, bei dem die Kostenfunktion anhand von Energiewerten als Kosten betrachtet wird. Dabei wird von der aktuellen Position bzw. einem aktuell befahrenen Streckenabschnitt des Kraftfahrzeugs 1 ausgegangen, um Zielpunkte auf der Karte zu finden, die mit der verbleibenden Restenergie maximal erreichbar sind.

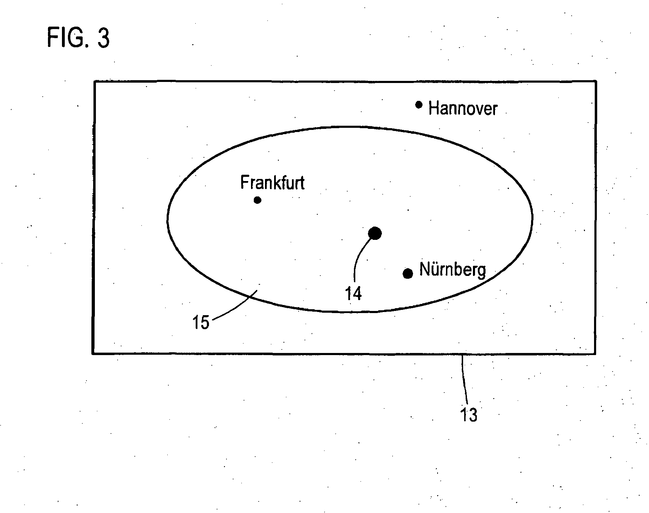

Sowohl zum Abschluss der ersten Weise als auch zum Abschluss der zweiten Weise wird nun eine Fläche berechnet, die das Reichweitengebiet, wie es durch die Flächensegmente bzw. Zielpunkte beschrieben ist, beschreibt, wobei beispielsweise ein Rand als ein Polygonzug oder dergleichen ermittelt werden kann. In einem Schritt 12 wird die so ermittelte Teilfläche der Karte auf der Anzeigevorrichtung 8 dargestellt. Eine derartige mögliche Anzeige ist in Fig. 3 als Prinzipskizze dargestellt.

Auf der Karte 13 ist die aktuelle Position 14 neben den üblichen Karteninformationen, beispielsweise der Lage von Städten, dargestellt. Innerhalb der Teilfläche 15 liegende Bereiche sind dabei in einer anderen Farbe dargestellt als außerhalb der Teilfläche 15 liegende Bereiche, welche beispielsweise rot dargestellt sein können. Selbstverständlich sind auch andere Farben bzw. Farbkombinationen denkbar.

## Patentansprüche

1. Verfahren zum Berechnen einer Restreichweite und/oder eines Verbrauchs eines Kraftfahrzeugs (1) mit einem Energiespeichersystem (3) für einen auf mindestens ein Rad des Kraftfahrzeugs (1) wirkenden Antrieb (2),
**dadurch gekennzeichnet,**
- **dass** die Restreichweite und/oder der Verbrauch auf eine erste Weise unter Verwendung eines ersten Algorithmus und auf eine zweite Weise unter Verwendung eines zweiten Algorithmus berechenbar ist; wobei die zweite Weise einen höheren Berechnungsaufwand erfordert als die erste Weise,
- **dass** zwischen der ersten Weise und der zweiten Weise in Abhängigkeit der im Energiespeichersystem (3) gespeicherten Energie umgeschaltet wird, und
- **dass** als der erste Algorithmus ein auf Flächensegmenten mit jeweils zugeordneten Energiekosten basierender Algorithmus und als der zweite Algorithmus ein ein auf Straßensegmenten basierender Dijkstra-Algorithmus oder ein von einem Dijkstra-Algorithmus abgeleiteter Algorithmus mit Energiewerten als Kostenfunktion verwendet wird.

2. Verfahren nach Anspruch 1,
**dadurch gekennzeichnet,**
**dass** als das Energiespeichersystem (3) ein Energiespeichersystem (3) verwendet wird, das einen Kraftstofftank (4) und/oder eine Batterie (5) aufweist.

3. Verfahren nach Anspruch 1 oder 2,
**dadurch gekennzeichnet,**
**dass** bei einer einen Grenzwert unterschreitenden Grenzenergie der zweite Algorithmus und sonst der erste Algorithmus verwendet wird.

4. Verfahren nach einem der vorangehenden Ansprüche,
**dadurch gekennzeichnet,**
**dass** ein zum Umschalten zwischen der ersten Weise und der zweiten Weise genutztes Kriterium, insbesondere der Grenzwert, in Abhängigkeit von einer Benutzereingabe angepasst wird.

5. Verfahren nach einem der vorangehenden Ansprüche,
**dadurch gekennzeichnet, dass** das aus der Restreichweitenberechnung eine erreichbare Teilfläche (15) einer Karte (13) ermittelt und angezeigt wird.

6. Kraftfahrzeug (1) mit einer Berechnungsvorrichtung (7) zum Berechnen einer Restreichwieite und/oder eines Verbrauchs des Kraftfahrzeugs (1), einem auf wenigstens ein Rad des Kraftfahrzeugs wirkenden Antrieb (2) und einem Energiespeichersystem (3) für den Antrieb (2), **dadurch gekennzeichnet,**
**dass** durch die Berechnungsvorrichtung (7)
- die Restreichweite und/oder der Verbrauch auf eine erste Weise und eine zweite Weise berechenbar ist, wobei die zweite Weise einen höheren Berechnungsaufwand erfordert als die erste Weise,
- zwischen der ersten Weise und der zweiten Weise in Abhängigkeit der im Energiespeichersystem (3) gespeicherten Energie umschaltbar ist,
wobei der erste Algorithmus ein auf Flächensegmenten mit jeweils zugeordneten Energiekosten basierender Algorithmus und der zweite Algorithmus ein auf Straßensegmenten basierender Dijkstra-Algorithmus oder ein von einem Dijkstra-Algorithmus abgeleiteter Algorithmus mit Energiewerten ist.

7. Kraftfahrzeug nach Anspruch 6,
**dadurch gekennzeichnet,**
**dass** das Energiespeichersystem (3) einen Kraftstofftank (4) und/oder eine Batterie (5) aufweist.

8. Kraftfahrzeug nach Anspruch 6 oder 7,
dadurch gennzeichnet,
dass die Berechnungsvorrichtung (7) Teil eines Navigationssystems (6) ist.

## Claims

1. Method for calculating a remaining range and/or consumption of a motor vehicle (1) which comprises an energy storage system (3) for a drive (2) acting on at least one wheel of the motor vehicle (1),
**characterised in that**
- the remaining range and/or the consumption can be calculated, in a first way, using a first algorithm and, in a second way, using a second algorithm, the second way requiring more complex calculation than the first way,
- switching takes place between the first way and the second way depending on the energy stored in the energy storage system (3), and
- an algorithm based on portion segments which are each assigned energy costs is used as the first algorithm, and either Dijkstra's algorithm, which is based on road segments, or an algorithm derived from Dijkstra's algorithm which uses energy values as a cost function is used as the second algorithm.

2. Method according to claim 1, **characterised in that** an energy storage system (3) comprising a fuel tank (4) and/or a battery (5) is used as the energy storage system (3).

3. Method according to either claim 1 or claim 2, **characterised in that** the second algorithm is used if threshold energy falls below a threshold value, and otherwise the first algorithm is used.

4. Method according to any of the preceding claims, **characterised in that** a criterion, in particular the threshold value, used for switching between the first way and the second way is adapted depending on a user entry.

5. Method according to any of the preceding claims, **characterised in that** a reachable sub-portion (15) of a map (13) is determined and displayed as a result of calculating the remaining range.

6. Motor vehicle (1) comprising a calculation device (7) for calculating a remaining range and/or consumption of the motor vehicle (1), a drive (2) acting on at least one wheel of the motor vehicle and an energy storage system (3) for the drive (2), **characterised in that**, by means of the calculation device (7),
- it is possible to calculate the remaining range and/or the consumption in a first way and a second way, the second way requiring more complex calculation than the first way,
- it is possible to switch between the first way and the second way depending on the energy stored in the energy storage system (3),
the first algorithm being an algorithm based on portion segments which are each assigned energy costs and the second algorithm being Dijkstra's algorithm, based on road segments, or an algorithm derived from Dijkstra's algorithm which uses energy values.

7. Motor vehicle according to claim 6, **characterised in that** the energy storage system (3) comprises a fuel tank (4) and/or a battery (5).

8. Motor vehicle according to either claim 6 or claim 7, **characterised in that** the calculation device (7) forms part of a navigation system (6).

## Revendications

1. Procédé de calcul d'une autonomie restante et/ou d'une consommation d'un véhicule automobile (1) avec un système d'accumulation d'énergie (3) pour un entraînement (2) opérant sur au moins une roue du véhicule automobile (1),
**caractérisé en ce que** :
- l'autonomie restante et/ou la consommation peut ou peuvent être calculées d'une première manière en utilisant un premier algorithme et d'une seconde manière en utilisant un second algorithme, dans lequel la seconde manière nécessite une dépense de calcul plus élevée que la première manière,
- l'on permute entre la première manière et la seconde manière en fonction de l'énergie stockée dans le système d'accumulation d'énergie, et
- l'on utilise comme premier algorithme un algorithme se basant sur des segments de surface avec des coûts d'énergie affectés respectivement et comme second algorithme un algorithme de Dijkstra se basant sur des segments de route ou encore un algorithme tiré d'un algorithme de Dijkstra avec des valeurs d'énergie comme fonction de coût.

2. Procédé selon la revendication 1,
**caractérisé en ce que** :
l'on utilise comme système d'accumulation d'énergie (3) un système d'accumulation d'énergie (3) qui présente un réservoir de carburant (4) et/ou une batterie (5).

3. Procédé selon la revendication 1 ou la revendication 2,
**caractérisé en ce que** :
l'on utilise, dans le cas d'une énergie limite située en dessous d'une valeur limite, le second algorithme et sinon le premier algorithme.

4. Procédé selon l'une quelconque des revendications précédentes,
**caractérisé en ce que** :
l'on adapte un critère utilisé pour permuter entre la première manière et la seconde manière, en particulier la valeur limite, en fonction d'une saisie d'utilisateur.

5. Procédé selon l'une quelconque des revendications précédentes,
**caractérisé en ce qu'**une surface partielle accessible (15) d'une carte (13) est déterminée et affichée à partir du calcul de l'autonomie restante.

6. Véhicule automobile (1) équipé d'un dispositif de calcul (7) pour le calcul d'une autonomie restante et/ou d'une consommation du véhicule automobile (1), d'un entraînement (2) opérant sur au moins une roue du véhicule automobile et d'un système d'accumulation d'énergie (3) pour l'entraînement (2),
**caractérisé en ce que**,
au moyen du dispositif de calcul (7),
- l'autonomie restante et/ou la consommation peut ou peuvent être calculées d'une première manière et d'une seconde manière, dans lequel la seconde manière nécessite une dépense de calcul plus élevée que la première manière,
- l'on peut permuter entre la première manière et la seconde manière en fonction de l'énergie stockée dans le système d'accumulation d'énergie (3),
dans lequel le premier algorithme est un algorithme se basant sur des segments de surface avec des coûts d'énergie affectés respectivement, le second algorithme est un algorithme de Dijkstra se basant sur des segments de route ou un algorithme tiré d'un algorithme de Dijkstra avec des valeurs d'énergie.

7. Véhicule automobile selon la revendication 6, **caractérisé en ce que** :
le système d'accumulation d'énergie (3) présente un réservoir de carburant (4) et/ou une batterie (5).

8. Véhicule automobile selon la revendication 6 ou la revendication 7,
**caractérisé en ce que** :
le dispositif de calcul (7) fait partie d'un système de navigation (6).
